(19) Europäisches Patentamt

European Patent Office

Office européen des brevets

(11) Veröffentlichungsnummer: **0 190 100**
**B1**

# (12) EUROPÄISCHE PATENTSCHRIFT

(45) Veröffentlichungstag der Patentschrift:
04.10.89

(51) Int. Cl.⁴: **B 23 K 9/02,** B 23 K 9/10

(21) Anmeldenummer: **86810027.2**

(22) Anmeldetag: **20.01.86**

(54) Sensoranordnung für Lichtbogen-Bearbeitungsmaschinen.

(30) Priorität: **31.01.85 CH 426/85**

(43) Veröffentlichungstag der Anmeldung:
**06.08.86 Patentblatt 86/32**

(45) Bekanntmachung des Hinweises auf die Patenterteilung:
**04.10.89 Patentblatt 89/40**

(84) Benannte Vertragsstaaten:
**AT CH DE FR GB IT LI SE**

(56) Entgegenhaltungen:
**EP-A-0 007 034**
**EP-A-0 130 940**
**DE-A-2 747 539**
**FR-A-2 394 783**
**GB-A-2 064 135**
**GB-A-2 067 447**
**GB-A-2 123 993**

(73) Patentinhaber: **GET Gesellschaft für Elektronik-Technologie mbH, Klingenbergstrasse 16, D-4930 Detmold (DE)**

(72) Erfinder: **Schmall, Karl-Heinz, Waldstrasse 20, D-7570 Baden-Baden 19 (DE)**

(74) Vertreter: **Hepp, Dieter, HEPP & Partner AG Marktgasse 18, CH-9500 Wil (CH)**

EP 0 190 100 B1

## Beschreibung

Die Erfindung betrifft eine mit Lichtbogen arbeitende Bearbeitungsmaschine gemäss Oberbegriff von Anspruch 1 oder 2.

Bei den meisten mit Lichtbogen arbeitenden Bearbeitungsmaschinen ist die Kontrolle oder Steuerung der Lichtbogenlänge entscheidend für das Resultat. So ist z. B. die Qualität einer mittels einer elektrischen Schweissmaschine hergestellten Schweissnaht entscheidend von der Lichtbogenlänge zwischen Elektrode und Werkstück abhängig. Gleiches gilt auch für Brennschneidanlagen und andere vergleichbare Material abtragende, Material auftragende oder Material verbindende Bearbeitungsmaschinen oder -verfahren mit Lichtbogen.

Bekanntlich wird der Lichtbogen bei derartigen Maschinen dadurch erzeugt, dass zwischen dem Werkzeug und dem Werkstück ein Strom, vorzugsweise ein Gleichstrom mit hoher Stromstärke fliesst. Sobald der Lichtbogen gezündet ist, lässt sich im Plasma auch bei relativ niederen Gleichspannungen die Lichtbogenlänge und damit der Arbeitsbereich mit einer relativ grossen Toleranz steuern. Vergleichbares Werkzeug (z. B. Schweisselektrode) und Werkstück vorausgesetzt, entspricht dabei jeweils eine bestimmte Brennspannung bzw. ein bestimmter Brennstrom der jeweiligen Lichtbogenlänge. Diese Erkenntnis hat man sich bei Nachführ-Regelanordnungen für Brennschneidanlagen bereits dadurch zunutze gemacht, dass der Brennstrom und/oder die Brennspannung zwischen Werkzeug und Werkstück gemessen und mit einem Sollwert verglichen wird und dass bei Ermittlung von Abweichungen der Abstand zwischen Werkzeug und Werkstück solange verändert wird, bis Sollwert und Istwert wieder übereinstimmen. Auf diese Weise lässt sich eine sehr genaue Abstandsregelung erreichen, die vor allem zur kontinuierlichen Abstandsregelung bei Werkstücken mit welliger oder unregelmässiger Oberfläche von grossem Vorteil ist. Eine solche Anlage wird z. B. von der Firma Messer Griesheim, Frankfurt/Main, unter der Bezeichnung LIBO-Regelung vertrieben. Dieses Verfahren bezeichnet man als prozessorientierte Sensorik.

Das Erzeugen der Regelspannung aus der Spannung oder dem Strom des Lichtbogens ist dabei wegen der geforderten Isolationstrennung sehr kostenaufwendig. Ein Nachteil dieses Verfahrens ist auch, dass man sowohl für die Erstfindung als auch für die vom Lichtbogenstrom abhängige Regelung je ein komplettes Sensorsystem benötigt, was die Gesamtkosten der Anlage beträchtlich erhöht. Auch können Regelungenauigkeiten dadurch auftreten, dass die gleichspannungsmässig erfassten und zu einer Regel- und Auswertungsanordnung übertragenen Mess-Signale, welche der Lichtbogenlänge entsprechen, durch elektrische Störgrössen auf dem Leitungsweg beeinflusst und verfälscht werden.

Der Erfindung liegt die Aufgabe zugrunde, die Nachteile des Bekannten zu vermeiden, insbesondere also eine verbesserte Bearbeitungsmaschine zu schaffen deren Sensoranordnung mit geringem Aufwand und hoher Störsicherheit Regelsignale erzeugt, die vom Lichtbogenstrom abgeleitet werden.

Erfindungsgemäss wird dies in erster Linie gemäss dem Kennzeichen von Anspruch 1 und 2 erreicht.

Überraschenderweise werden dadurch ohne grossen bauteilmässigen Aufwand zwei wesentliche Vorteile erreicht: Durch die Umwandlung von Änderungen des Lichtbogenstroms bzw. der Lichtbogenspannung in Frequenzänderungen des Oszillators ist es möglich, konventionelle LC-Sensoranordnungen, wie sie z. B. bei kapazitiven oder induktiven Messanordnungen zur Erstfindung verwendet werden, auch zur Regelung im Lichtbogenbetrieb einzusetzen. Ausserdem lässt sich die Übertragung der Messwerte zwischen Sensoranordnung und Regler durch Hochfrequenzsignale wesentlich störungsunanfälliger als die Übertragung von Analog-Signalen gestalten. Die erfindungsgemässe Anordnung ist also nicht nur universeller und insgesamt einfacher im Aufbau, sondern auch genauer und störungssicherer.

Schwierigkeiten bereitet beim Stand der Technik auch die Abstandsregelung beim erstmaligen "Anfahren" des Werkzeugs an das Werkstück, d.h. bevor der Lichtbogen gezündet hat und damit ein auswertbares Mess-Signal vorliegt. Gleiches gilt für den Fall, dass während des Bearbeitungsvorganges der Lichtbogen z. B. durch eine Störung erlischt. Das Anfahren an das Werkstück wird allgemein als "Abstands-Erstfindung" bezeichnet.

Das Problem der Abstandsregelung oder Abstandssteuerung bei der automatischen Erstfindung wird bislang dadurch gelöst, dass zusätzlich zur lichtbogenabhängigen Regelanordnung ein separater Regelkreis verwendet wurde, der meist mit einem induktiven oder kapazitiven Fühler bei der Erstfindung den Abstand zwischen Werkstück und Werkzeug fortlaufend misst, bis der Sollabstand erreicht ist. Nach dem Zünden wird die Fühleranordnung abgeschaltet und aus dem unmittelbaren Arbeitsbereich des Werkzeugs durch mechanische Hilfsmittel entfernt.

Die Erfindung lässt sich deshalb bei einer Sensoranordnung mit einer zweiten Messeinrichtung zur Abstandsmessung bei abgeschaltetem oder nicht voll betriebsbereitem Lichtbogen mittels eines kapazitiven oder induktiven Fühlers besonders vorteilhaft anwenden, wenn der Fühler als weiteres frequenzveränderndes Bauelement des Oszillators angeordnet ist. Der Kapazitätswert bzw. der Induktivitätswert des Fühlers ist dabei in bekannter Weise vom Abstand des Fühlers zum Werkstück abhängig. Sowohl die lichtbogenabhängigen Messwert-Signale als auch die vom kapazitiven oder induktiven Fühler abgeleiteten abstandsproportionalen Signale werden dabei also in der gleichen Schaltungsanordnung weiterverarbeitet. Während nämlich bekannte Messeinrichtungen in Sensoranordnungen nur einen kapazitiven oder induktiven Abstandsfühler aufweisen, der als frequenzveränderndes Bauteil eines LC-Kreises, meist eines Oszillators, ausgebildet ist, wird erfindungsgemäss in einer solchen Schaltung ein zweites frequenzveränderndes Bauteil vorgesehen, dessen Frequenzeigenschaften nicht durch den Abstand eines Fühlers vom Werkstück, sondern durch diejenigen abstandsproportionalen Signale verändert werden, die von der Spannung bzw. vom Strom des Lichtbogens abgeleitet werden.

Konventionelle Fühler und LC-Kreise der früher verwendeten Art sind z. B. in den folgenden Deutschen Offenlegungsschriften des Anmelders beschrieben: DE-OS-2 726 648 (AT: 14.6.77), DE-OS-2 829 851 (AT: 7.7.78), DE-OS-2 747 539 (AT: 22.10.77) sowie CH-PS-641 989 (AT: 20.12.79).

Danach bleibt es dem Fachmann überlassen, aufgrund des spezifischen Anwendungsgebiets zu entscheiden, ob die Induktivität oder die Kapazität eines LC-Kreises als frequenzveränderndes Bauteil, d.h. also als Fühler verwendet wird. Bewährt haben sich in diesem Zusammenhang Schaltungsanordnungen, bei denen der LC-Kreis Teil eines Oszillators ist.

Besonders einfach lässt sich die Erfindung realisieren, wenn die Induktivität eine Spule mit Hochfrequenz-Kern ist, welche als Teil in einen magnetischen Kreis einbezogen ist, wenn im magnetischen Kreis wenigstens eine Vormagnetisierungsspule vorgesehen ist, an welche der Lichtbogenlänge proportionale Signale derart angelegt werden, dass durch Vormagnetisierung des magnetischen Kreises mittels der durch die Vormagnetisierungsspule fliessenden Gleichstromsignale die Induktivität der frequenzbestimmenden Spule veränderbar ist. Durch entsprechende Voreinstellung der Vormagnetisierungsspule lässt sich dabei der Arbeitspunkt des magnetischen Kreises beliebig voreinstellen, wodurch die Charakteristik der Induktivitätsveränderung und damit die Regelcharakteristik des Gesamtkreises justierbar ist.

Die geforderte hohe Isolationsspannungsfestigkeit zwischen der Lichtbogenstromquelle und dem Hochfrequenzkreis lässt sich mittels dieser Anordnung sehr einfach und mit passiven Bauteilen erreichen, weil beide magnetischen Kreisspulen räumlich trennbar und nicht galvanisch miteinander verbunden sind.

Die Sensoranordnung lässt sich besonders vorteilhaft so einsetzen, dass vollautomatisch und ohne separate Umschaltung jeweils der Abstand durch die der Lichtbogenlänge proportionalen Mess-Signale geregelt wird, sofern und solange der Lichtbogen brennt, dass jedoch automatisch auf Abstandsregelung durch einen induktiven oder kapazitiven Fühler umgeschaltet wird, wenn der Lichtbogen nicht brennt. Dies lässt sich besonders vorteilhaft erreichen, wenn die durch den Lichtbogenstrom bzw. die Lichtbogenspannung veränderbare Kapazität bzw. die veränderbare Induktivität derart dimensioniert sind, dass bei eingeschaltetem Lichtbogen die Frequenz des Oszillators sich so wesentlich von der durch den Abstandsfühler bestimmten Arbeitsfrequenz unterscheidet, dass die Frequenzarbeitsbereiche durch frequenzselektive Bauteile, insbesondere Bandfilter, ermittelbar sind. Besonders gute Signaltrennung lässt sich dabei dann erreichen, wenn der Frequenz-Arbeitsbereich des Abstandsfühlers wenigstens um den Faktor 1,5 vom Frequenz-Arbeitsbereich der durch den Lichtbogenstrom veränderbaren Induktivität bzw. Kapazität abweicht.

Besonders vorteilhaft wird Überlagerung der Ausgangssignale der beiden frequenzbestimmenden Bauteile unterbunden, wenn eine Schalteinrichtung vorgesehen ist, welche den kapazitiven oder induktiven Fühler vom LC-Glied und/oder dem Oszillatoreingang trennt, sobald die veränderbare Kapazität bzw. Induktivität nach Zünden des Lichtbogens durch die von der Lichtbogenlänge abhängigen Signale im Frequenzarbeitsbereich verlagert wird.

Die Erfindung ist im folgenden in Ausführungsbeispielen anhand der Zeichnungen näher erläutert. Es zeigen:

Figur 1 eine Bearbeitungsmaschine mit Sensoranordnung mit den Merkmalen der Erfindung,

Figur 2 ein abgewandeltes Ausführungsbeispiel mit einer Kapazitätsdiode als zweites frequenzbestimmendes Bauteil,

Figur 3 ein abgewandeltes Ausführungsbeispiel mit einem Piezoelement als frequenzbestimmendes Bauteil,

Figur 4 ein schematisch dargesteller Kurvenverlauf am Diskriminator, der in der Sensoranordnung vorgesehen ist,

Figur 5 ein Ausführungsbeispiel mit automatischer Abschaltung des Fühlers beim Auftreten der lichtbogenabhängigen Mess-Signale, und

Figur 6 den Spannungsverlauf am Lichtbogen bzw. der Lichtbogen-Stromquelle.

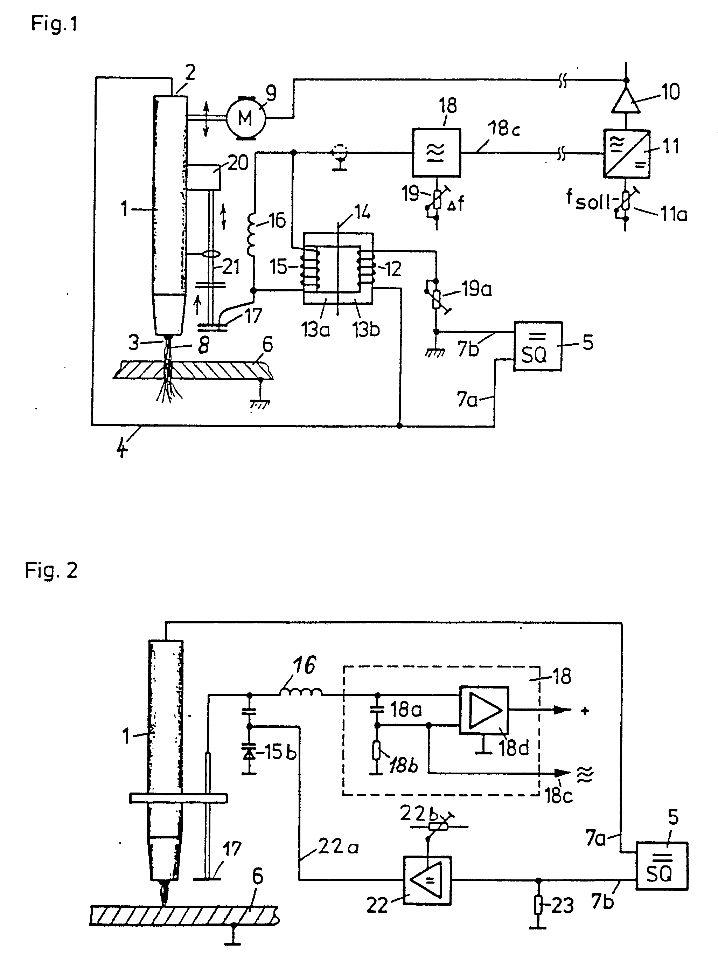

Gemäss Figur 1 ist als Werkzeug 1 einer automatischen Schweissmaschine eine Elektrodenhalterung 2 vorgesehen, in welcher eine Elektrode 3 angeordnet ist, die über eine Leitung 4 mit dem ersten Ausgang 7a einer Schweißstromquelle 5 verbunden ist. Ein zweiter Ausgang 7b der Schweißstromquelle 5 ist an Masse gelegt, ebenso ein Werkstück 6, das eine zu schneidende Stahlplatte ist. Die Elektrodenhalterung 2 kann mittels eines Motors 9 in der Höhe verstellt werden, wodurch sich der Abstand zwischen Elektrode 3 und Werkstück 6 und damit die Länge des Lichtbogens 8 regeln lässt. Der Motor 9 wird durch einen Regelverstärker 10 angesteuert, welcher Regelsignale von einem Diskriminator 11 erhält.

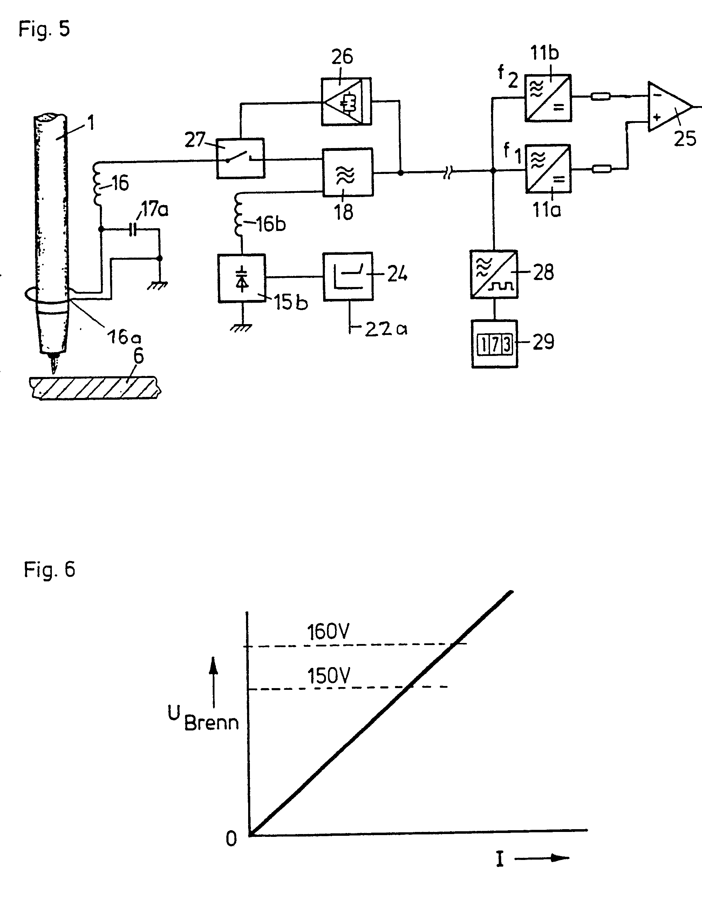

Je nach Länge des Lichtbogens 8 verändert sich die Spannung zwischen den beiden Ausgängen 7a und 7b der Schweißstromquelle 5 in einem Arbeitsbereich von zwischen ca. 150 Volt und 160 Volt, wie aus Figur 6 ersichtlich. Diese Spannung liegt an einer Vormagnetisierungsspule 12, welche Teil eines aus zwei Ferritkernen 13a und 13b bestehenden magnetischen Kreises ist. Zwischen den Ferritkernen 13a und 13b ist eine Platte 14 aus Isolationsmaterial angebracht, die eine zuverlässige Trennung der Hochspannung der Schweissstromquelle 5 von der nachstehend beschriebenen Regelschaltung bewirkt. Bei konventionellen Regelanlagen wird eine derartige Trennung nur durch aufwendige Trennverstärker und andere Massnahmen erreicht, während sie bei der erfindungsgemässen Anordnung ein selbstverständliches, einfach zu realisierendes Element des magnetischen Kreises 13a, 13b ist. Um den Ferritkern 13a ist eine Spule 15 gewickelt, die parallel zu einer Spule 16 geschaltet ist. Die Spule 16 ist ausserdem mit einem kapazitiven Fühler 17 verbunden, so dass die Spulen 15 und 16 zusammen mit dem kapazitiven Fühler 17 einen LC-Kreis bilden. Die Kapazität des kapazitiven Fühlers 17 ist von dessen Abstand zum Werkstück 6 abhängig. Der LC-Kreis 15, 16, 17 ist an den Eingang eines Oszillators 18 geschaltet und bestimmt dessen Schwingfrequenz. Der Oszillator 18 weist ausserdem einen Einstellwiderstand 19 auf, welcher eine Frequenzvorwahl erlaubt. Der Einstellwiderstand 19a ermöglicht die Vorwahl der Frequenz und damit des Abstandes im Lichtbogenbetrieb.

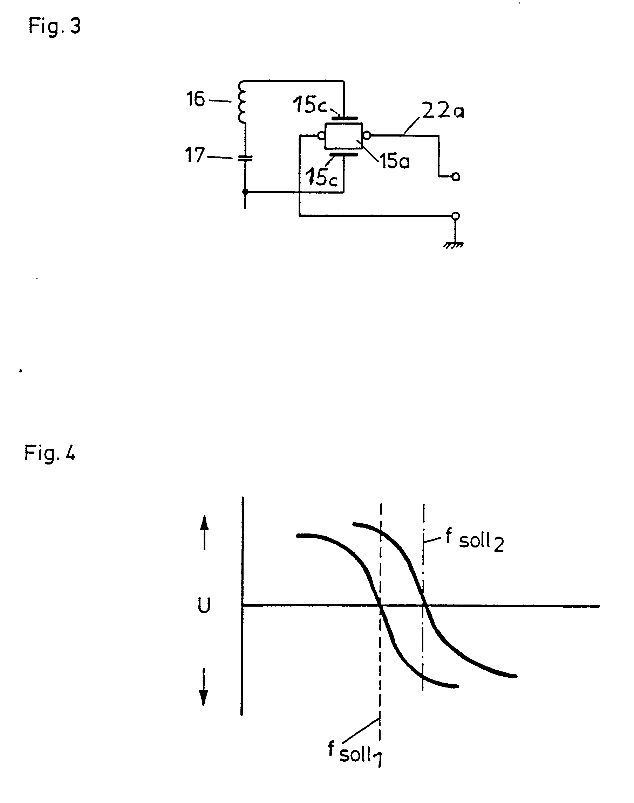

Im praktischen Ablauf arbeitet die Sensoranordnung gemäss Figur 1 wie folgt: Zum Anfahren, d.h. vor dem Zünden des Lichtbogens 8, wird die Elektrodenhalterung 2 durch den Motor 9 über das Werkstück 6 gefahren. Eine Abstandsveränderung zwischen Werkzeug 1 und Werkstück 6 führt zu einer Änderung der Fühlerkapazität 17 und damit zu einer Veränderung der Frequenz des Oszillators 18. Das vom Oszillator 18 an einen Diskriminator 11 abgegebene HF-Signal wird durch diesen in Gleichstromsignale umgewandelt. Sofern sich der kapazitive Fühler 17 im Sollabstand zum Werkstück 6 befindet, entspricht die Ausgangsfrequenz am Oszillator 18 der Sollfrequenz $f_{soll}$, so dass am Ausgang des Diskriminators 11 keine Spannung anliegt. Der Motor 9 wird also stillgesetzt (Figur 4). Ist der Abstand des Werkzeugs 1 und des Fühlers 17 vom Werkstück 6 dagegen zu gross, sinkt der Kapazitätswert, es steigt die Oszillatorfrequenz, am Ausgang des Diskriminators 11 erscheint ein negatives Signal, welches vom Regelverstärker 10 verstärkt wird und den Motor 9 derart ansteuert, dass das Werkzeug 1 wieder dem Werkstück 6 angenähert wird. Dabei steigt der Kapazitätswert des Kapazitätsfühlers 17 wieder an, die Frequenz des Oszillators 18 nähert sich langsam der Sollfrequenz, das Ausgangssignal am Diskriminator 11 und am Regelverstärker 10 sinkt bis auf Null, sobald der Sollwert wieder erreicht wird. Die Sollfrequenz und damit der Werkzeugabstand lässt sich durch einen Einstellwiderstand 11a am Diskriminator 11 einstellen. Ausserdem lässt sich die Oszillatorfrequenz, und damit ebenfalls der Abstand zwischen Werkzeug 1 und Werkstück 6 manuell durch den Einstellwiderstand 19 am Oszillator 18 verstellen.

Sofern im Betriebsablauf der Lichtbogen 8 gezündet hat, steigt die Spannung an der Vormagnetisierungsspule 12. Der magnetische Kreis 13a, 13b wird weiter in den Sättigungsbereich gebracht, womit die Induktivität der Spule 15 sinkt. Mittels einer elektromechanisch auslösbaren Hubanordnung 20 kann eine Halterung 21 des Kapazitätsfühlers 17 angehoben werden, so dass der Kapazitätsfühler 17 in einen derartigen Abstand vom Werkstück 6 gebracht wird, dass durch Veränderungen des Werkzeug-Werkstück-Abstands 1 - 6 keine störende Kapazitätsveränderung mehr eintritt. Frequenzveränderungen des LC-Kreises werden danach ausschliesslich durch Induktivitätsveränderungen der Spule 15 bewirkt. Jede Veränderung der Länge des Lichtbogens 8 führt zu einer Veränderung des Schweißstroms und damit zu einer Spannungsänderung über den Ausgängen 7a, 7b der Schweißstromquelle 5. Dies wiederum ändert den Stromfluss durch die Vormagnetisierungsspule 12 und beeinflusst die Induktivität der Spule 15, wodurch - analog wie bei den vorher beschriebenen Kapazitätsänderungen des Kapazitätsfühlers 17 - die Frequenz des Oszillators 18 verändert wird, was wiederum abstandsproportionale Signale am Ausgang des Diskriminators 11 hervorruft. Die Umwandlung der Spannungsschwankungen am Ausgang 7a, 7b der Schweißstromquelle 5 in Frequenz-Signale mittels Spulen 12 und 15, LC-Anordnung 16, 17 und Oszillator 18 ist besonders deshalb vorteilhaft, weil die Übertragung der abstandsabhängigen Signale an den Diskriminator 11 über eine Leitung 18c dadurch von Störspannungen und Induktionen, wie sie vor allem bei solchen Schweissanlagen häufig zu beobachten sind, unbeeinflusst bleiben. Der Diskriminator 11 gibt seine Ausgangssignale ausschliesslich in Abhängigkeit von Frequenzschwankungen ab und ist unbeeinflusst von Spannungsschwankungen auf der Leitung 18c.

Ausserdem erlaubt die Umwandlung der Spannungsschwankungen am Ausgang 7a, 7b der Schweißstromquelle 5 die Verwendung einer gemeinsamen Auswertungsschaltung (Oszillator 18, Diskriminator 11 und Regelverstärker 10) sowohl für Regelung mittels Kapazitätsfühler 17 als auch für Regelung in Abhängigkeit von der Länge des Lichtbogens 8 bzw. der Lichtbogenspannung.

Beim Ausführungsbeispiel gemäss Figur 2 sind gleiche Bauteile mit gleichen Bezugsziffern gekennzeichnet. Dabei ist der Oszillator 18 detaillierter dargestellt und zeigt den Kondensator 18a, den Verstärker 18d, den Ausgangswiderstand 18b und den Spannungsausgang an der Leitung 18c.

Abweichend vom Ausführungsbeispiel gemäss Figur 1 ist parallel zum veränderlichen Kapazitätswert des kapazitiven Fühlers 17 eine Kapazitätsdiode 15b geschaltet. Die Kapazitätsdiode 15b ist ersichtlicherweise ein frequenzbestimmendes Bauteil im LC-Kreis 16, 15, 17. Der Kapazitätswert der Kapazitätsdiode 15b ist durch eine Spannung veränderbar, welche über eine Leitung 22a von einem Spannungsverstärker 22 abgenommen wird, der mit einem Einstellwiderstand 22b zur Verstärkungseinstellung versehen ist. Der Spannungsverstärker 22 liegt an einem Serien-Widerstand 23, welcher vom Schweißstrom durchflossen wird. Der proportionale Spannungsabfall am Widerstand 23 wird im Spannungsverstärker 22 verstärkt, so dass die Kapazität der Diode 15b vom Schweißstrom gesteuert wird. Grösser werdende Spannung verkleinert die Kapazität der Kapazitätsdiode 15b und bewirkt damit eine entsprechende Frequenzänderung des Oszillators 18, der wiederum in der vorstehend beschriebenen Weise ein Ausgangssignal am Diskriminator 11 und damit ein Nachführsignal für den Motor 9 erzeugt.

Figur 3 zeigt eine Ausführungsform analog Figur 2, wobei jedoch statt der Kapazitätsdiode 15b ein Piezoelement 15a vorgesehen ist, das auf beiden Seiten mit Kondensatorbelägen 15c beschichtet ist. Das Piezoelement 15a ist andererseits über die Leitung 22a an den Spannungsteiler 22, 22b (Figur 2) angeschlossen. Jede Veränderung der Gleichspannung an der Leitung 22a bewirkt eine geometrische Veränderung des Piezoelements 15a, die den Abstand der Elektroden 15c und damit den Kapazitätswert der Anordnung verändert. Dies führt wiederum in der beschriebenen Weise zu einer Frequenzveränderung des LC-Glieds 15c, 17, 16 und damit zu einer Oszillatorverstimmung.

Beim Ausführungsbeispiel gemäss Figur 5 ist eine Sensoranordnung mit induktivem Fühler 16a schematisch dargestellt. Der Induktivitätswert des induktiven Fühlers 16a wird durch Annäherung an das Werkstück 6 verändert, so dass sich das Frequenzverhalten des LC-Glieds 16a, 17a, 16 verändert, wodurch die Ausgangsfrequenz des Oszillators 18 verändert wird. Am Oszillator 18 liegt ausserdem ein zweites LC-Glied bestehend aus einer Spule 16b und einer Kapazitätsdiode 15b. Die beiden parallel liegenden LC-Kreise sind dabei derart abgestimmt, dass der Oszillator 18 in einem Frequenzbereich F1 schwingt, solange über die Leitung 22a kein Gleichspannungssignal kommt, welches dem gezündeten Lichtbogen entspricht. Dies wird durch ein Schwellwertglied 24 erreicht, welches Signale unterdrückt, die bei nicht gezündetem Lichtbogen 8 anliegen. Der im Frequenzbereich F1 schwingende Oszillator wird durch den induktiven Fühler 16a in bekannter Weise verstimmt, wobei die Frequenzänderungen im Diskriminator 11a ausgewertet werden, der auf die Frequenz F1 abgestimmt ist. Das Ausgangssignal des Diskriminators 11a liegt am Eingang eines Summierverstärkers 25, der an den Regelverstärker 10 (Figur 1) angeschlossen ist. Die durch den Fühler 16a bewirkte Abstandsregelung läuft solange in der vorstehend beschriebenen Weise ab, wie der Lichtbogen 8 nicht gezündet hat. Sobald der Lichtbogen 8 gezündet hat, liegt am Eingang des Schwellwertgliedes 24 ein höheres Gleichspannungssignal an, das dieses durchlässt und die Kapazitätsdiode 15b dadurch in ihren Arbeitsbereich bringt. Der Kapazitätswert der Kapazitätsdiode 15b verändert sich stark, der Oszillator 18 wird aus dem Frequenzbereich F1 heraus verstimmt. Am Ausgang des Oszillators 18 liegt ein frequenzselektiver Verstärker 26, der auf diese veränderte Frequenz abgestimmt ist und dessen Ausgangssignal ein Torglied 27 betätigt, das Spule 16, Kapazität 17a und induktiven Fühler 16a vom Eingang des Oszillators 18 trennt. Der Oszillator 18 schwingt jetzt in einem Frequenzbereich F2 (Fig.4) wobei als frequenzveränderndes Bauteil die Kapazitätsdiode 15b wirkt, deren Kapazitätswert von der Lichtbogenspannung und damit von der Länge des Lichtbogens 8 (nicht dargestellt) abhängt. Die Signale im Frequenzbereich F2 werden vom Diskriminator 11b in Gleichstromsignale umgewandelt und an den zweiten Eingang des Summierverstärkers 25 gelegt. Damit erfolgt die Abstandsregelung des Werkzeugs 1 solange ausschliesslich durch Messung der Lichtbogenspannung bzw. des Lichtbogenstroms wie der Lichtbogen besteht und dementsprechend die am Schwellwertglied 24 anliegende Eingangsspannung oberhalb dessen Sperrbereichs liegt. Sofern jedoch im Betriebsablauf durch eine Störung der Lichtbogen erlischt oder dieser über dem Werkstück abgeschaltet wird, fällt die Spannung am Schwellwertglied 24 ab, die Kapazitätsdiode 15b verändert ihren Kapazitätswert derart stark, dass die Oszillatorfrequenz aus dem Frequenzbereich F2 verstimmt wird, der frequenzselektive Verstärker 26 gibt kein Ausgangssignal mehr an das Torglied 27 ab, das Torglied 27 schliesst wieder und damit ist die Sensoranordnung automatisch wieder auf den Frequenzbereich F1 zurückgestellt, in welchem Frequenzveränderung und Abstandsregelung ausschliesslich durch den induktiven Fühler 23 bewirkt werden. Dadurch wird auf ausserordentlich einfache Weise eine störungssichere Regelung gewährleistet.

Verständlicherweise wird diese Funktion auch durch eine strom- oder/und spannungsgesteuerte, veränderliche Induktivität, wie in Figur 1 beschrieben, ermöglicht.

Parallel zu den Diskriminatoren 11a und 11b ist ein HF-Digitalumwandler 28 vorgesehen, welcher die Ausgangssignale des Oszillators 18 in proportionale Digitalsignale umwandelt, die einer digitalen Anzeigeeinrichtung 29 zugeführt werden; dort wird auf diese Weise der jeweilige Frequenzwert bzw. der Abstandswert angezeigt. Selbstverständlich wäre es auch möglich, nicht nur die Anzeige, sondern auch die Motorregelung statt analog über die Diskriminatoren 11a, 11b durch den Digitalausgang des HF-Digitalumwandlers 28 anzusteuern.

**Patentansprüche**

1. Mit Lichtbogen arbeitende Bearbeitungsmaschine mit einer Stromquelle (5) zur Abgabe des zwischen einer Elektrode (3) eines Werkzeugs (1) und einem Werkstück (6) fliessenden Lichtbogenstroms, mit einer auf den Spannungs- oder Stromwert der Stromquelle (5) ansprechenden Sensoranordnung zum Ermitteln des Abstands zwischen dem Werkzeug (1) und dem Werkstück (6) und mit einer Antriebseinrichtung (9) zum Verändern des Abstands zwischen Werkzeug (1) und Werkstück (6), wobei die Sensoranordnung einen HF-Oszillator (18) und wenigstens eine die Oszillatorfrequenz bestimmende veränderbare Kapazität (15a, 15b) aufweist, welcher Oszillator (18) mit einer Anordnung (10, 11; 11a, 11b, 25; 28) zum Umwandeln der Frequenzänderungen in Regelsignale verbunden ist, die zur Ansteuerung der Antriebseinrichtung (9) und/oder einer Anzeigeeinrichtung (29) dienen, dadurch gekennzeichnet, dass als veränderbare Kapazität (15a, 15b) ein Kondensator vorgesehen ist, dessen Kapazitätswert durch Anlegen einer Steuerspannung veränderbar ist, und dass die Stromquelle (5) direkt oder indirekt über ein Zwischenglied (19a, 22, 24) derart mit der veränderbaren Kapazität verbunden ist, dass der Kapazitätswert in Abhängigkeit vom Lichtbogenstrom bzw. der Lichtbogenspannung veränderbar ist.

2. Mit Lichtbogen arbeitende Bearbeitungsmaschine mit einer Stromquelle (5) zur Abgabe des zwischen einer Elektrode (3) eines Werkzeugs (1) und einem Werkstück (6) fliessenden Lichtbogenstroms, mit einer auf den Spannungs- oder Stromwert der Stromquelle (5) ansprechenden Sensoranordnung zum Ermitteln des Abstands zwischen dem Werkzeug (1) und dem Werkstück (6) und mit einer Antriebseinrichtung (9) zum Verändern des Abstands zwischen Werkzeug (1) und Werkstück (6), wobei die Sensoranordnung einen HF-Oszillator (18) und wenigstens eine die Oszillatorfrequenz bestimmende, veränderbare Induktivität (15) aufweist, welcher Oszillator (18) mit einer Anordnung (10, 11; 11a, 11b, 25; 28) zum Umwandeln der Frequenzänderungen in Regelsignale verbunden ist, die zur Ansteuerung der Antriebseinrichtung (9) und/oder einer Anzeigeeinrichtung (29) dienen, dadurch gekennzeichnet, dass als veränderbare Induktivität eine Spule (15) vorgesehen ist, die in einem magnetischen Kreis (Magnetkern 13a, 13b) mit Vormagnetisierungswicklung (12) angeordnet ist, und dass die Stromquelle (5) direkt oder indirekt über ein Zwischenglied (19a, 22, 24) derart mit der Vormagnetisierungswicklung der veränderbaren Induktivität verbunden ist, dass der Induktivitätswert in Abhängigkeit vom Lichtbogenstrom bzw. der Lichtbogenspannung veränderbar ist.

3. Bearbeitungsmaschine nach Anspruch 1 oder 2, dadurch gekennzeichnet, dass der Oszillator (18) wenigstens ein weiteres frequenzveränderndes Bauelement aufweist, das als kapazitiver Abstandsfühler (17) oder als induktiver Abstandsfühler (16a) ausgebildet ist, und dass der Abstandsfühler (17 bzw. 16a) derart relativ zum Werkstück (6) verlagerbar ist, dass der Kapazitätswert bzw. der Induktivitätswert vom Abstand des Abstandsfühlers (17, 16a) zum Werkstück (6) abhängig ist.

4. Bearbeitungsmaschine nach einem der Ansprüche 1 oder 3, dadurch gekennzeichnet, dass die veränderbare Kapazität ein Piezoelement (15a) ist, das auf zwei gegenüberliegenden Seiten mit Kondensatorelektroden (15c) belegt ist, die als frequenzveränderndes Element an den Oszillator 18 angeschlossen sind, und dass das Piezoelement (15a) andererseits derart an den Ausgang der Schaltungsanordnung (19a, 23, 22, 24) zur Erzeugung von dem Lichtbogenstrom bzw. der Lichtbogenspannung proportionalen Signalen angeschlossen ist, so dass der Abstand der Kondensatorelektroden (15c) und damit der Kapazitätswert dem jeweiligen Lichtbogenstrom bzw. der Lichtbogenspannung entspricht.

5. Bearbeitungsmaschine nach einem der Ansprüche 1 oder 3 bis 4, dadurch gekennzeichnet, dass die veränderbare Kapazität eine Kapazitätsdiode (15a) ist.

6. Bearbeitungsmaschine nach einem der Ansprüche 1 bis 5, dadurch gekennzeichnet, dass an den Ausgang des Oszillators (18) ein frequenzselektives Bauteil (26), insbesondere ein Bandfilter oder ein Diskriminator angeschlossen ist, dass die durch den Lichtbogenstrom bzw. die Lichtbogenspannung veränderbare Kapazität (15a, 15b) oder die veränderbare Induktivität (15) derart dimensioniert ist, dass sich die Frequenz des Oszillators (18) bei bestehendem Lichtbogen (8) so verändert, dass die Frequenzänderung im frequenzselektiven Bauteil (26) ermittelbar ist.

7. Bearbeitungsmaschine nach Anspruch 6, dadurch gekennzeichnet, dass eine Schalteinrichtung (27) vorgesehen ist, welche den kapazitiven oder induktiven Abstandsfühler (17, 16a) vom Oszillator (18) trennt, wenn durch die veränderbare Kapazität (15a, 15b) bzw. die veränderbare Induktivität (15) nach dem Zünden des Lichtbogens durch die von der Lichtbogenlänge abhängigen Signale der Frequenzarbeitsbereich verändert wird.

**Claims**

1. A processing machine which operates with an electric arc, comprising a current source (5) for producing an arc current flowing between an electrode (3) of a tool (1) and a workpiece (6), a sensor arrangement responsive to the value of the voltage or current of the current source (5) for determining the distance between the tool (1) and the workpiece (6), and a drive means (9) for varying the distance between the tool (1) and the workpiece (6), the sensor arrangement comprising an HF-oscillator (18) and at least one variable capacitance (15a, 15b) which determines the oscillator frequency, which oscillator (18) is connected to an arrangement (10, 11; 11a, 11b, 25; 28) for converting the variations in frequency into regulating signals which serve for actuation of the drive means (9) and/or a display means (29), characterised in that the variable capacitance (15a, 15b) is a capacitor whose capacitance value is variable by applying a control voltage, and that the current source (5) is connected directly or indirectly by way of an intermediate member (19a, 22, 24) to the variable capacitance in such a way that the capacitance value is variable in dependence on the arc current or the arc voltage.

2. A processing machine which operates with an electric arc, comprising a current source (5) for producing an arc current flowing between an electrode (3) of a tool (1) and a workpiece (6), a sensor arrangement responsive to the value of the voltage or current of the current source (5) for determining the distance between the tool (1) and the workpiece (6), and a drive means (9) for varying the distance between the tool (1) and the workpiece (6), the sensor arrangement comprising an HF-oscillator (18) and at least one variable inductance (15) which determines the oscillator frequency, which oscillator (18) is connected to an arrangement (10, 11; 11a, 11b, 25; 28) for converting the variations in frequency into regulating signals which serve for actuation of the drive means (9) and/or a display means (29), characterised in that the variable inductance is a coil (15) which is arranged in a magnetic circuit (magnetic core 13a, 13b) with bias magnetising winding (12), and that the current source (5) is connected directly or indirectly by way of an intermediate member (19a, 22, 24) to the bias magnetising winding of the variable inductance in such a way that the inductance value is variable in dependence on the arc current or the arc voltage.

3. A machine according to claim 1 or claim 2 characterised in that the oscillator (18) has at least one further frequency-varying component which is in the form of a capacitive distance sensor (17) or an inductive distance sensor (16a) and that the distance sensor (17 or 16a) is displaceable relative to the workpiece (6) in such a way that the capacitance value or the inductance value respectively is dependent on the distance of the distance sensor (17, 16a) from the workpiece (6).

4. A machine according to one of claims 1 and 3 characterised in that the variable capacitance is a piezoelectric element (15a) which is provided on two oppositely disposed sides with capacitor electrodes (15c) which are connected as a frequency-varying element to the oscillator (18) and that the piezoelectric element (15a) is connected on the other hand to the output of the circuit arrangement (19a, 23, 22, 24) for producing signals proportional to the arc current or the arc voltage, in such a way that the distance between the capacitor electrodes (15c) and thus the capacitance value corresponds to the respective arc current or arc voltage.

5. A machine according to one of claims 1 or 3 and 4 characterised in that the variable capacitance is a capacitance diode (15a).

6. A machine according to one of claims 1 to 5 characterised in that a frequency-selective component (26), in particular a band pass filter or a discriminator, is connected to the output of the oscillator (18), that the capacitance (15a, 15b) which is variable by the arc current or the arc voltage or the variable inductance (15) is so dimensioned that the frequency of the oscillator (18), with an arc (8) existing, varies in such a way that the variation in frequency can be detected in the frequency-selective component (26).

7. A machine according to claim 6 characterised in that there is provide a switching means (27) which separates the capacitive or inductive distance sensor (17, 16a) from the oscillator (18) when the frequency operating range is varied by the variable capacitance (15a, 15b) or the variable inductance (15) after firing of the arc by the signals which are dependent on the arc length.

**Revendications**

1. Machine d'usinage travaillant avec un arc électrique et comportant une source de courant (5) servant à délivrer le courant d'arc électrique circulant entre une électrode (3) d'un outil (1) et une pièce à usiner (6), ainsi qu'un dispositif à capteur qui, en réponse à la valeur de la tension ou du courant de la source de courant (5), détermine la distance entre l'outil (1) et la pièce à usiner (6), et un dispositif d'entraînement (9) pour modifier la distance entre l'outil (1) et la pièce à usiner (6), le dispositif à capteur comportant un oscillateur HF (18) et au moins une capacité variable (15a, 15b) déterminant la fréquence de l'oscillateur, lequel oscillateur (18) est relié à un dispositif (10, 11; 11a, 11b, 25; 28) destiné à convertir les variations de la fréquence en des signaux de régulation qui servent à commander le dispositif d'entraînement (9) et/ou un dispositif d'affichage (29), caractérisée en ce qu'il est prévu, comme capacité variable (15a, 15b), un condensateur dont la valeur de capacité peut être modifiée par l'application d'une tension de commande, et en ce que la source de courant (5) est reliée directement ou indirectement par un élément intermédiaire (19a, 22, 24) à la capacité variable de telle sorte que la valeur de la capacité puisse être modifiée en fonction du courant ou de la tension de l'arc électrique.

2. Machine d'usinage travaillant avec un arc électrique et comportant une source de courant (5) servant à délivrer le courant d'arc électrique circulant entre une électrode (3) d'un outil (1) et une pièce à usiner (6), ainsi qu'un dispositif à capteur qui, en réponse à la valeur de la tension ou du courant de la source de courant (5), détermine la distance entre l'outil (1) et la pièce à usiner (6), et un dispositif d'entraînement (9) pour modifier la distance entre l'outil (1) et la pièce à usiner (6), le dispositif à capteur comportant un oscillateur HF (18) et au moins une inductance variable (15) déterminant la fréquence de l'oscillateur, lequel oscillateur (18) est relié à un dispositif (10, 11; 11a, 11b, 25; 28) destiné à convertir les variations de la fréquence en des signaux de régulation qui servent à commander le dispositif d'entraînement (9) et/ou un dispositif d'affichage (29), caractérisée en ce qu'il est prévu, comme inductance variable, une bobine (15) disposée dans un circuit magnétique (noyau magnétique 13a, 13b) comportant un enroulement de préaimantation (12), et en ce que la source de courant (5) est reliée directement ou indirectement par un élément intermédiaire (19a, 22, 24) à l'enroulement de préaimantation de l'inductance variable de telle sorte que la valeur de l'inductance puisse être modifiée en fonction du courant ou de la tension de l'arc électrique.

3. Machine d'usinage selon la revendication 1 ou 2, caractérisé en ce que l'oscillateur (18) comporte au moins un autre composant modifiant la fréquence, qui est réalisé sous la forme d'un capteur capacitif de distance (17) ou sous la forme d'un capteur inductif de distance (16a), et en ce que le capteur de distance (17 ou 16a) peut être déplacé par rapport à la pièce à usiner (6) de telle sorte que la valeur de la capacité ou de l'inductance dépende de la distance entre le capteur de distance (17, 16a) et la pièce à usiner (6).

4. Machine d'usinage selon l'une des revendications 1 ou 3, caractérisée en ce que la capacité variable est un élément piézoélectrique (15a) qui, sur deux faces opposées, est recouverte par des électrodes (15c) de condensateur, qui sont raccordées, en tant qu'élément modifiant la fréquence, à l'oscillateur (18), et en ce que l'élément piézoélectrique (15a) est raccordé d'autre part à la sortie du montage (19a, 23, 22, 24) servant à produire des signaux proportionnels au courant ou à la tension de l'arc électrique, de telle sorte que la distance entre les électrodes de condensateur (15c) et par conséquent la valeur de la capacité correspondent respectivement au courant ou à la tension de l'arc électrique.

5. Machine d'usinage selon l'une des revendications 1 ou 3 à 4, caractérisée en ce que la capacité variable est une diode à capacité (15a).

6. Machine d'usinage selon l'une des revendications 1 à 5, caractérisée en ce qu'à la sortie de l'oscillateur (18), est raccordé un composant (26) sélectif à l'égard de la fréquence, notamment un filtre passe-bande ou un discriminateur, en ce que la capacité (15a, 15b) qui peut être modifiée par le courant ou la tension de l'arc électrique, ou l'inductance variable (15), est dimensionnée de manière que la fréquence de l'oscillateur (18) soit modifiée, dans le cas de la présence d'un arc électrique (8), d'une façon telle que la variation de la fréquence puisse être déterminée dans le composant (26) sélectif à l'égard de la fréquence.

7. Machine d'usinage selon la revendication 6, caractérisée en ce qu'il est prévu un dispositif de commutation (27) qui déconnecte le capteur capacitif ou inductif de distance (17, 16a) de l'oscillateur (18) lorsque la plage des fréquences de travail est modifiée par la capacité variable (15a, 15b) ou par l'inductance variable (15) après l'amorçage de l'arc électrique par les signaux qui dépendent de la longueur de l'arc électrique.

Fig.1

Fig. 2

Fig. 3

16 — 

15c

22a

15a

17 — 

15c

Fig. 4

U

f soll 2

f soll 1

Fig. 5

26

11b

f₂

27

16

17a

16b

18

16a

15b

24

6

22a

28

f₁

11a

25

173

29

Fig. 6

160V

150V

$U_{Brenn}$

0

I